# EUROPEAN PATENT APPLICATION

(11) **EP 1 237 105 A1**
(43) Date of publication of application: **04.09.2002**
(21) Application number: 01810159.2
(22) Date of filing: 16.02.2001
(51) Int. Cl.: G06F 17/60, G06F 17/30

(54) **Method for storing and retrieving user preferences**

(71) Applicant: ABB RESEARCH LTD., 8050 Zürich (CH)
(72) Inventor: Fabri, Andreas, 06130 Le Plan de Grasse (FR); Werner, Thomas, 5404 Baden (CH); Friedrich, Holger, 5405 Baden-Dättwil (CH); Auf der Maur, Dominik, 8005 Zürich (CH)
(74) Representative: ABB Patent Attorneys

(57) **Abstract**

In a method and computer program product for storing and retrieving user preferences according, each of a plurality of user preference data sets (1,1',1") is associated with a service, and the user preference data sets (1,1',1") are stored in a storage means (2) in a form that is viewable, understandable and changeable by the user. The method comprises the steps of a service provider data processing device (5,5',5")
a) sending a request for a user preference data set (1,1',1") to a storage means control device (3) that controls the storage means,
b) receiving information from the storage means control device (3) which indicates whether the requested user preference data set (1,1',1") is stored in the storage means (2), and then either,
c) if this is the case, receiving the requested user preference data set (1,1',1"), or
d) if this is not the case, acquiring user preferences, expressing said user preferences as a new user preference data set and sending the new user preference data set to the storage means control device (3) for storage in the storage means (2).

## Description

### Field of the Invention

The invention relates to the field of data storage, retrieval, and organization. It relates to a method, computer program product and computer program for storing and retrieving user preferences as described in the preamble of claims 1, 8 and 9, respectively.

### Background of the Invention

Hotel chains, airlines, travel agencies and online stores store preferences as part of customer related data in a customer relationship management (CRM) system. The data is typically entered by a receptionist, in a call center or by the user when entering a web site the first time.
Applications areas for user preferences are, e.g.,
■ travel related preferences like smoker/non-smoker, carnivore/vegetarian, window/aisle seat in airplances, preferences on hotel rooms (favorite TV programms, room temperature, ironing board in the room), preferences for renting a car, as preferred model, radio programs, individual settings for rear mirror, seat and steering wheel position,
■ online shopping preferences like clothing size, favorite colours, etc. Such preference data is stored in proprietary formats, is redundant and is not controllable by the user, who does not even know which data is stored about him. Information that does not fit into the CRM system cannot be entered additionally, i.e. these systems are not customizable to user needs and wishes.

There do exist methods for providing a single access point to a variety of web services and for storing related data that is typed into online forms: Novell Inc. offers, under www.digitalme.com, an interface service that saves passwords and user names for other websites and enters them automatically, so that the user only has to remember a single password for digitalme's website. A related interface service stores data that is used in filling out forms of other websites and, when a form is used repeatedly, fills in the form automatically.

However, all data items, with the exception of name, address and credit card information are specific to each service provider and each form.

### Description of the Invention

It is therefore an object of the invention to create a method and computer program product for storing and retrieving user preferences of the type mentioned initially that allows a user to have complete control over all data provided to service providers and that allows a plurality of service providers that provide a similar service to share preferences data.

These objects are achieved by a method, computer program product and computer program for storing and retrieving user preferences according to the claims 1, 8 and 9.

In the method and computer program product for storing and retrieving user preferences according to the invention, where each of a plurality of user preference data sets is associated with a service, the user preference data sets are stored in a storage means in a form that is viewable, understandable and changeable by the user. The method comprises the steps of a service provider data processing device
a) sending a request for a user preference data set to a storage means control device that controls the storage means,
b) receiving information from the storage means control device which indicates whether the requested user preference data set is stored in the storage means , and then either,
c) if this is the case, receiving the requested user preference data set, or
d) if this is not the case, acquiring user preferences, expressing said user preferences as a new user preference data set and sending the new user preference data set to the storage means control device 3 for storage in the storage means.

The invention allows a plurality of service providers for the same service to access the same user preferences, with the advantage that the tedious task of providing the same information to each of the plurality of providers repeatedly is eliminated. In a preferred embodiment of the invention, each service can add specific information or data set items that are not within the common user preference data set. In order to do this, the user is able to grant the service provider access to add data set items to the user preference data set.

Since the user can view and edit the preference information as well as control reading and writing access to the preference information, he has complete control over what preference information is stored and therefore transmitted.

A further advantage is that the task of acquiring user preferences lies with the service provider, which preferably use existing interfaces to this purpose. Therefore, there is no need for an interface that must be tailored to the needs of all conceivable service providers. An resulting advantage, for the user, is that he need not define preferences sets for different service providers, since this task is accomplished by providers of the same service defining a common set of preferences. The user need only maintain the storage means containing the user preference data sets, that is, he must, in a preferred embodiment of the invention, only maintain a text file, i.e. its contents and access rights. After new preference data for a hitherto unknown service is aquired, the corresponding user preference data set is inserted into the file. The user, if he wishes to do so, is then free to view and modify the preference data.

In a preferred embodiment of the invention, the text file is is structured according to an extended markup language (XML) standard. This allows viewing, understanding and editing the text file with a standard text editor or web browser.

In a further preferred embodiment of the invention, the user preference data sets represent customizable parameters related to at least one of airline or train travel, hotel accomodation, automobile settings, body measures, shopping preferences or environmental parameters in a building.

In a further preferred embodiment of the invention, the text file is shared, that is, it is transmitted to a PDA, cell phone, smartcard or another device the user carries with him.

Further preferred embodiments are evident from the dependent patent claims.

### Brief Description of the Drawings

The subject matter of the invention will be explained in more detail in the following text with reference to preferred exemplary embodiments which are illustrated in the attached drawings, in which:
- Figure 1: schematically shows a structure of entities taking part in an method according to the invention; and
- Figure 2: shows a flow diagram of the method according to the invention.
The reference symbols used in the drawings, and their meanings, are listed in summary form in the list of reference symbols. In principle, identical parts are provided with the same reference symbols in the figures.

### Detailed Description of Preferred Embodiments

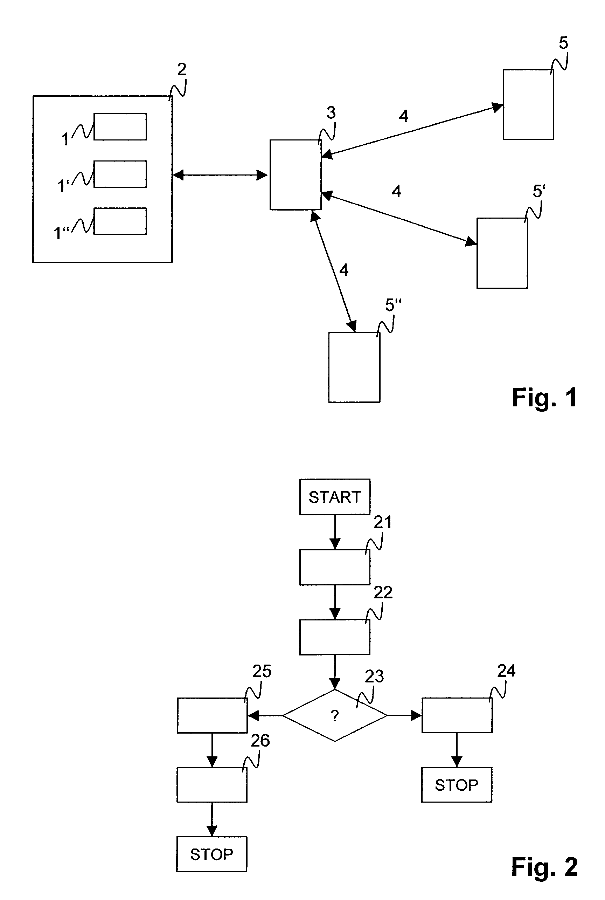

Figure 1 schematically shows a structure of entities taking part in an method according to the invention. A plurality of user preference data sets 1,1',1" is stored in a storage means 2 which is controlled and accessed by a storage means control device 3. The storage means control device 3 is configured to communicate through at least one communication link 4 with at least one of a plurality of service provider data processing devices 5,5',5".

In a preferred embodiment of the invention, the user preference data sets 1,1',1" are stored in a text file. The storage means 2 is a memory device such a a memory chip or hard disk which resides on portable device such as a smart card, a personal digital assistant (PDA), a cellular phone or a personal computer carried by the user. The storage means control device 3 is an interface device that is configured to access the storage means 2 by reading data from and writing data to the storage means 2 and to transmit or receive said data over the communication link 4. Data sent over the communication link 4 is preferaby encrypted according to a public-key encryption scheme.

In another preferred embodiment of the invention, the storage means 2 is implemented in a server computer accessible through an internet based communication protocol such as hypertext transmission protocol (HTTP). The service provider data processing device 5 is located remotely from the storage means control device 3 and storage means 2, i.e. under control of the service providing company and in another building or town. The service provider data processing device 5, or a plurality of service provider data processing devices 5,5',5", each residing at a different physical location, communicate remotely with the storage means control device 3.

The user preference data sets 1,1',1" are preferably encoded in a text file that is structured according to an extended markup language (XML) definition or a related standard. This allows to use existing mechanisms and standards to update user preference data sets 1,1',1" the via an internet protocol. Access to the content of an XML document is given through a document object model (DOM) standard, which specifies a standard application programming interface to client applications accessing the information stored within the XML document that is independent of the programming environment or language. An example for an XML description of a number of user preference data sets 1,1',1" is given below:

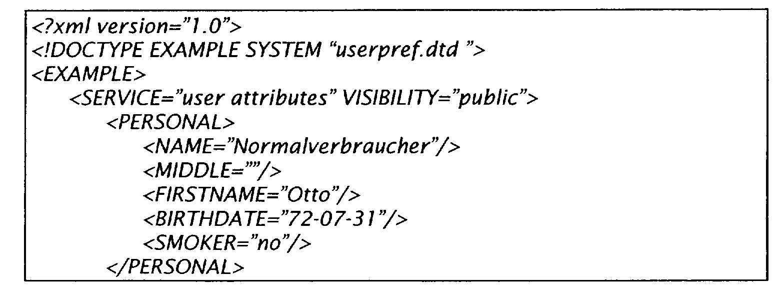

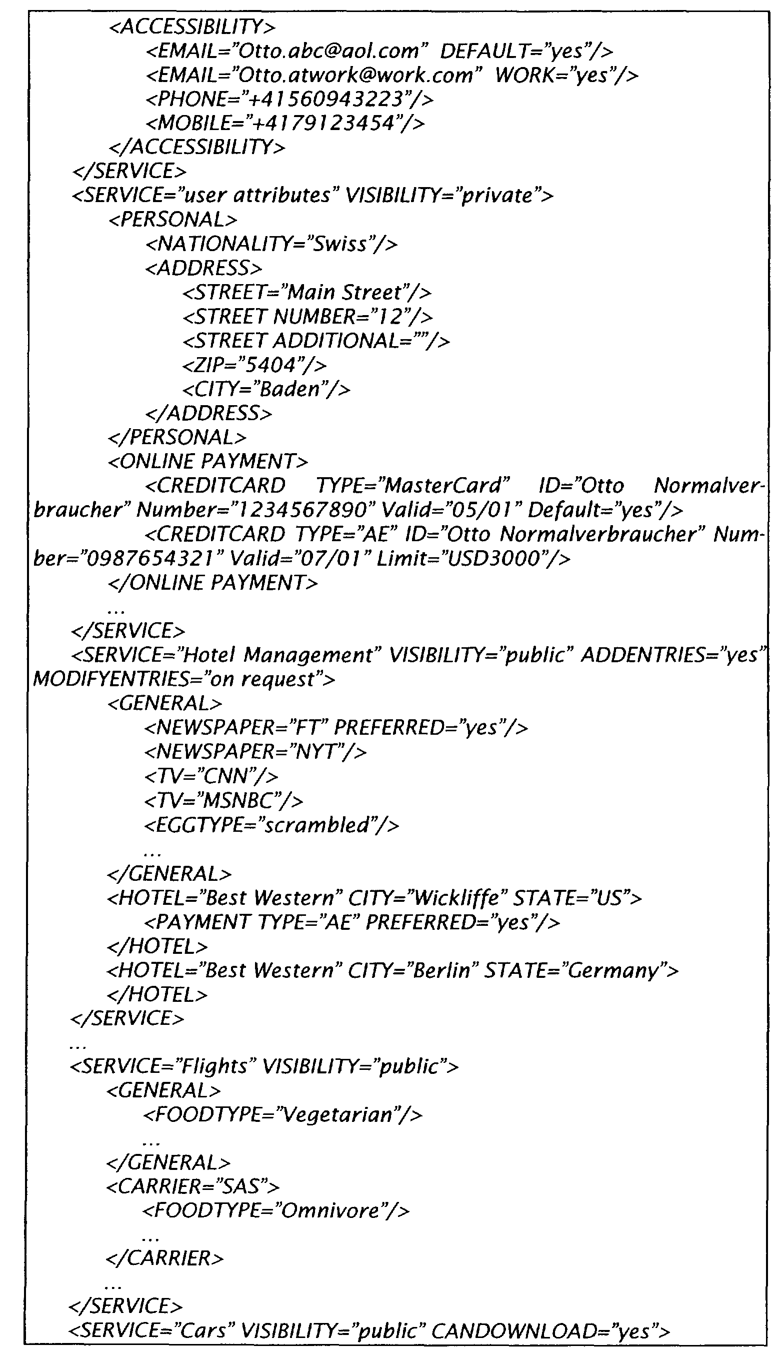

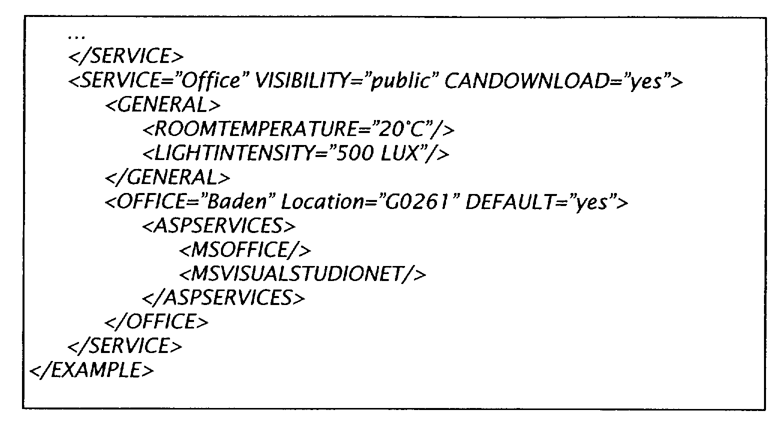

The line beginning with <!DOCTYPE specifies an external document type definition (DTD) document, which defines and is used to check the document's syntax. The text between <SERVICE> and </SERVICE> tags is a section corresponding to a given preference data set 1,1',1".

Every service section optionally specifies options ("public", "private") for access to data related to said service and options that specify which service can modify or add entries within a service section. Furthermore, copies of a user preference data set 1,1',1" may be made and stored in different portable devices. When one of a plurality of such copied user preference data sets 1,1',1" is modified, the remaining user preference data sets 1,1',1" are automatically updated according to known synchronisation methods.

Service providers can override entries within their sections (e.g., foodtype) if a corresponding parent entry exists but does not match the specific user preferences correpsonding to that service. For example, a user whose general preference is "vegetarian" may specify "omnivore" for a specific hotel.

The user preference data sets 1,1',1" are viewable either on the device that comprises the storage means 2 or are transmitted over the communication link 4 or another interface to a text editor or browser. For example, a PDA comprising the storage means 2 incorporates a browser that lets the user view and edit the file containing the user preference data sets 1,1',1". Or, a web server comprising the storage means 2 is accessed through the HTTP by the user with a browser/editor running on a remote client computer. A user may delete or change preferences, and, if he knows the tags associated a specific service, also define a complete user preference data set 1,1',1" with the editor.

Figure 2 shows a flow diagram of the method according to the invention, as it is executed on a computer of a service provider or service provider data processing device 5,5',5". This service provider data processing device 5,5',5" is, for example, an embedded computer that controls a seat position and air conditioning in a car, or a building control system that controls heating and ventilation of a room in which the user is located, or a host computer of a travel agency or a reservation system of an airline or train provider.
■ When the user uses a corresponding service, the service provider data processing device 5,5',5", in step 21, receives a service request.
■ The service provider data processing device 5,5',5", in step 22, establishes a communication link 4 with the storage means control device 3 and sends a request for a user preference data set 1,1',1" associated with the requested service to the storage means control device 3.
■ The service provider data processing device 5,5',5", in step 23, receives information from the storage means control device 3 which indicates whether the requested user preference data set 1,1',1" is stored in the storage means 2, and the method branches according to an existence of a required user preference data set 1,1',1".
■ If the received information indicates that the requested user preference data set 1,1',1" is indeed stored in the storage means 2, the service provider data processing device 5,5',5", in step 24, receives the requested user preference data set 1,1',1" from the storage means control device 3.
■ If the received information indicates that the requested user preference data set 1,1',1" is not stored in the storage means 2, the service provider data processing device 5,5',5", in step 25, acquires user preferences, expresses said user preferences as a new user preference data set and, in step 26, sends the new user preference data set through the communication link 4 to the storage means control device 3 for storage in the storage means 2.

In a preferred embodiment of the invention, a user preference data set 1,1',1" represents travel related user preferences, i.e. preferences regarding seating in a train, smoker/nonsmoker, carnivore/vegetarian, as described in the background of the invention.

The service request, in step 21, is initiated by the user communicating with the service provider data processing device 5,5',5" that runs a computer program that implements a reservation system or communicates with a reservation system. The user communicates with the reservation system through a web browser or a voice recognition system or a human operator. The service request essentially contains the message that the user wishes to book a place on a train or plane and/or a room at a hotel.

In step 22, the communication link 4 depends on the nature of the storage means 2 and storage means control device 3. If they are implemented as a web site or server, then the service provider data processing device 5,5',5" receives a uniform resource locator (URL) that specifies how and where to access the server and to retreive the required user preference data set 1,1',1". The server is either maintained by the user herself on a website or by a preference service hosting provider. In the latter case, the user is identified by a global unique identifier.

If the storage means 2 and storage means control device 3 are implemented in a web-enabled PDA or cell phone, then the service request has preferably been initiated through an internet connection with the service provider data processing device 5,5',5" which then also serves as the communication link 4. Other protocols suited for accessing the user preference data sets 1,1',1" are Simple Object Access Protocol (SOAP), Java Message System (JMS), or Universal Plug and Play (UpnP). Communication of the protocols is accomplished through internet protocols (TCP/IP), Bluetooth, Infrared Data (IRDa) and/or smartcard protocols.

In step 25, user preferences are acquired in a known fashion, for example by the service provider data processing device 5,5',5" prompting the user for preferences by an interactive voice system or by a form displayed in a web browser.

In step 26, the newly acquired user preferences are encoded in XML format and are transmitted through the communication link 4 to the storage means control device 3, together with an instruction to insert the new preference data into the preferences file. In a preferred embodiment of the invention, the new preference data is displayed to the user and the user is prompted to decide whether she agrees to store some or all preference data.

In another preferred embodiment of the invention, this prompting does not occur for each new preference, but rather for a plurality new or modified preferences. For example, when a connection is established between the service provider data processing device 5,5',5" and the storage means control device 3, the user is prompted to accept changes to preference data that have been registered by the service provider. For example, a PDA that is turned on after settings in a car have been changed shall record all changed settings together.

In a further preferred embodiment of the invention, the user is prompted to decide on whether said data or part of said data should be later available to only the current service provider, or to a class of service providers providing the same service, or to all service providers.

In another preferred embodiment of the invention, a user preference data set 1,1',1" represents user preferences regarding customizable parameters of an automobile, such as preferred model, favourite radio programs, seat, rear mirror and steering wheel position. The information about the preferred model is used when booking a car, similar to the method for booking other travel related services, as described above. For the remaining preferences, the service request of step 21 is initiated by the user entering the car with a smart card or PDA that has means for wire based or wireless communication 4 with an embedded computer of the car, which in this embodiment corresponds to the service provider data processing device 5,5',5". If necessary, in step 25, preferences are acquired through manual adjustment by the user. If preferences exist, the corresponding adjustments are made, following step 24, by modifying the customizable parameters automatically in accordance with a user preference data set 1,1',1", for examply, by servo motors adjusting the seat position. Some preferences, such as seat position are specific to a car model, others, such as radio stations, are usable in all models.

In a further preferred embodiment of the invention, a user preference data set 1,1',1" represents user preferences regarding environmental parameters in a building, such as room temperature, humidity, position of window shades, illumination settings and/or routing of telephone calls. The inventive method is executed analogous to the automobile example described above.

In another preferred embodiment of the invention, user preference data sets 1,1',1" describe preferences related to online shopping, such as clothing sizes, favourite styles and colours.

In order for a plurality of service providers to share a user preference data set 1,1',1", they agree on at least a subset of preferences that they wish to share, and define corresponding entries or tags in the preferences file.

In a preferred embodiment of the invention, user preference data sets 1,1',1" are organized hierarchically, with e.g. a general section specifying food and smoking preferences that are applicable to more than one service.

A computer program according to the invention is executable on a data processing unit and comprises computer program code means, when said program is loaded on a computer, to make the computer execute the method according to the invention.

A computer program product according to the invention comprises a computer readable medium, having thereon: computer program code means, when said program is loaded on a computer, to make the computer execute the method according to the invention.

According to the invention, user preferences are stored in a single place with the user and not with the systems that makes use of these data. Such a system not only guarantees that information is up to date, it is also appealing from an ethical point of view since a user has control over her data.

The data are stored in a machine readable form in a highly flexible format, i.e. in a flavor of the extensible markup language (XML). This format has the advantage that it is easily parsable, it can be viewed in browsers and as it is simple it can be edited by a customer in any text editor.

From the service providers point of view, the information is grouped into different domains (car, hotel, shopping, ...) Stake holders in vertical application domains will refine the format, e.g., car manufacturers for the seat parameters or hotel chains.

### List of designations

- 1,1',1": user preference data set
- 2: storage means
- 3: storage means control device
- 4: communication link
- 5,5',5": service provider data processing device
- 21: receive a service request
- 22: send a request for a user preference data set
- 23: branch according to existence of user preference data set
- 24: receive requested user preference data set
- 25: acquire user preferences
- 26: send new user preference data set

## Claims

1. A method for storing and retrieving a plurality of user preference data sets (1,1',1") that are stored in a storage means (2) that is accessed through a storage means control device (3), and where each user preference data set (1,1',1") is associated with a service, and where each service is provided by at least one associated service provider,
**characterized in that** the user preference data sets (1,1',1") are viewable, understandable and changeable by the user, and **in that** method comprises a service provider data processing device (5,5',5"), after having received a service request,
a) sending a request for an associated user preference data set (1,1',1") to the storage means control device (3),
b) receiving information from the storage means control device (3) which indicates whether the requested user preference data set (1,1',1") is stored in the storage means (2),
c) if the requested user preference data set (1,1',1") is stored in the storage means (2), receiving the requested user preference data set (1,1',1") from the storage means control device (3),
d) if the requested user preference data set (1,1',1") is not stored in the storage means (2), acquiring user preferences, expressing said user preferences as a new user preference data set and sending the new user preference data set to the storage means control device (3) for storage in the storage means (2).

2. Method according to claim 1, **characterized in that** user preference data sets (1,1',1") are coded as text data that is structured according to an extendible markup language (XML) standard.

3. Method according to claim 1, **characterized in that** the storage means (2) and storage means control device (3) are implemented in a portable device.

4. Method according to claim 1, **characterized in that** the service provider data processing device (5,5',5") is located remotely from the storage means control device (3) and communicates remotely with the storage means control device (3).

5. Method according to claim 1, **characterized in that** a user preference data set (1,1',1") represents travel related user preferences and **in that** the method comprises the step of transmitting a user preference data set (1,1',1") automatically to a software system associated with a travel service .

6. Method according to claim 1, **characterized in that** a user preference data set (1,1',1") represents user preferences regarding customizable parameters of an automobile and **in that** the method comprises the step of modifying said parameters automatically in accordance with a user preference data set (1,1',1").

7. Method according to claim 1, **characterized in that** a user preference data set (1,1',1") represents user preferences regarding environmental parameters in a building and **in that** the method comprises the step of modifying said parameters automatically in accordance with a user preference data set (1,1',1").

8. A computer program product comprising a computer readable medium, having thereon: computer program code means, when said program is loaded on a computer, to make the computer execute the method according to claim 1.

9. A computer program for storing and retrieving a plurality of user preference data sets which is executable on a data processing unit and comprises computer program code means, when said program is loaded on a computer, to make the computer execute the method according to claim 1.
